# EUROPÄISCHE PATENTSCHRIFT

(11) **EP 4 359 681 B1**
(45) Veröffentlichungstag und Bekanntmachung des Hinweises auf die Patenterteilung: **30.04.2025**
(21) Anmeldenummer: 22731194.1
(22) Anmeldetag: 31.05.2022
(51) Int. Cl.: F16D 1/112, F16D 1/116, F16D 11/14

(54) **ADAPTER, INSBESONDERE FÜR EINEN GETRIEBEMOTOR, MIT EINER ADAPTERWELLE UND EINEM KUPPLUNGSTEIL SOWIE EINEM LAGER, INSBESONDERE WÄLZLAGER**
ADAPTER, MORE PARTICULARLY FOR A GEARED MOTOR, COMPRISING AN ADAPTER SHAFT, A CLUTCH PART AND A BEARING, MORE PARTICULARLY A ROLLING BEARING
ADAPTATEUR, EN PARTICULIER POUR UN MOTEUR À TRAIN D'ENGRENAGES, COMPRENANT UN ARBRE D'ADAPTATEUR, UNE PARTIE D'EMBRAYAGE ET UN PALIER, EN PARTICULIER UN PALIER À ROULEMENT

(30) Priorität: 22.06.2021 DE 102021003176
(43) Veröffentlichungstag der Anmeldung: 01.05.2024
(73) Patentinhaber: SEW-EURODRIVE GmbH & Co. KG, 76646 Bruchsal (DE)
(72) Erfinder: KASPER, Jürgen, 67360 Lingenfeld (DE); BRAND, Wolfgang, 76351 Linkenheim-Hochstetten (DE); MERKEL, Philipp, 76307 Karlsbad (DE)
(86) Internationale Anmeldenummer: PCT/EP2022/064776
(87) Internationale Veröffentlichungsnummer: WO 2022/268455

(56) Entgegenhaltungen:
- WO-A1-2015/036832
- DE-A1- 102009 009 459
- DE-A1- 102015 210 227
- DE-A1- 102016 117 466
- DE-U1- 202011 000 964

## Beschreibung

Die Erfindung betrifft einen Adapter, insbesondere für einen Getriebemotor, mit einer Adapterwelle und einem Kupplungsteil sowie einem Lager, insbesondere Wälzlager.

Es ist allgemein bekannt, dass ein Getriebemotor einen Elektromotor aufweist, der ein Getriebe antreibt.

Aus der DE 10 2019 003 546 A1 **ist** ein Adapter für einen Antrieb bekannt.

**Aus der** DE 10 2016 117 466 A1 **ist als nächstliegender Stand der Technik eine Riemenscheiben-Baugruppe mit Adapter bekannt.**

**Aus der** DE 10 2015 210 227 A1 **ist ein Antriebsstrang bekannt.**

**Aus der** WO 2015/036832 A1 **ist eien Wellenverbindung bekannt.**

**Aus der** DE 20 2011 000964 U1 **ist ein elektromotorischer Linearantrieb bekannt.**

**Aus der** DE 10 2009 009 459 A1 **ist eine Klauenkupplung bekannt.**

Der Erfindung liegt die Aufgäbe zugrunde, einen Getriebemotor möglichst kompakt auszubilden.

Erfindungsgemäß wird die Aufgabe bei dem Getriebemotor nach den in Anspruch 1 angegebenen Merkmalen gelöst.

Wichtige Merkmale der Erfindung bei dem Adapter sind, dass der Adapter insbesondere für einen Getriebemotor, mit einer Adapterwelle und einem Kupplungsteil sowie einem Lager, insbesondere Wälzlager, vorgesehen ist,
wobei das Adapterteil Klauen, insbesondere in axialer Richtung hervorragende Klauen, aufweist,
wobei der Innenring des Lagers auf einem an der Adapterwelle vorgesehenen, insbesondere fein bearbeiteten, Lagersitz aufgesteckt ist,
wobei der Lagersitz in axialer Richtung einen ersten Bereich überdeckt, in welchem der Lagersitz in Umfangsrichtung ununterbrochen ausgebildet ist, und einen zweiten Bereich, in welchem der Lagersitz in Umfangsrichtung insbesondere mehrfach unterbrochen ausgebildet ist.

Von Vorteil ist dabei, dass der Adapter sehr kompakt aufgebaut ist. Dabei ist allerdings ein unterbrochener Lagersitz vorgesehen. Da der unterbrochene Lagersitz jedoch im Klauenbereich angeordnet ist und die Klauen schon deshalb sehr steif ausgeführt sind, weil ein hohes Drehmoment durchgeleitet werden muss, ist das Lager ausreichend stabil aufgenommen.

Bei einer vorteilhaften Ausgestaltung ist zwischen den Klauen des Kupplungsteils und den Klauen der Adapterwelle ein Dämpfungsteil angeordnet,
insbesondere wobei das Dämpfungsteil einen Grundkörper und daran anageformte in radialer Richtung hervorragende Strahlenbereiche aufweist,
wobei die Strahlenbereiche axial zwischen je einer Klaue des Kupplungsteils und einer des Adapterteils angeordnet ist. Von Vorteil ist dabei, dass die Drehmomentübertragung spielfrei ermöglicht ist und Drehmomentschwankungen abdämpfbar sind.

Bei einer vorteilhaften Ausgestaltung ist in axialer Richtung zwischen dem ersten Bereich und dem zweiten Bereich eine in Umfangsrichtung umlaufende Ausnehmung, insbesondere eine

Ausdrehung, an der Adapterwelle ausgebildet. Von Vorteil ist dabei, dass der Lagersitz zwar auch an dieser Stelle unterbrochen ausgeführt ist, jedoch sind Aufwölbungen der Adapterwelle in dem Bereich der Ausnehmung beabstandet von dem Innenring des Lagers. Dabei werden die Aufwölbungen dann bewirkt, wenn die Klauen elastisch ausgelenkt werden, insbesondere bei durchzuleitenden Drehmomentstößen.

Bei einer vorteilhaften Ausgestaltung umfasst der von den Klauen in axialer Richtung überdeckte Bereich den zweiten Bereich und ist von dem ersten Bereich in axialer Richtung beabstandet. Von Vorteil ist dabei, dass der Lagersitz beide Bereiche aufweist und die Klauen beabstandet sind von dem ununterbrochenen Bereich. Somit ist dieser stabile Bereich entkoppelt von den elastisch auslenkbaren Klauen.

Insbesondere ist die axiale Richtung zur Drehachse der Adapterwelle parallel ausgerichtet, insbesondere wobei die Umfangsrichtung und/oder der Radialabstand auf diese Drehachse bezogen ist oder sind.

Bei einer vorteilhaften Ausgestaltung ist der Innenring axial beidseitig durch Sicherungsringe begrenzt. Von Vorteil ist dabei, dass das erste Lager als Festlager ausgeführt ist.

Bei einer vorteilhaften Ausgestaltung ist ein erster Sicherungsring in einer ersten Ringnut, insbesondere in einer vollständig und/oder ununterbrochen in Umfangsrichtung umlaufenden ersten Ringnut, der Adapterwelle aufgenommen und begrenzt den Innenring,
wobei die erste Ringnut von dem ersten Bereich und/oder von den Klauen in axialer Richtung beabstandet ist. Von Vorteil ist dabei, dass der erste Sicherungsring zwar in einer stabilen ununterbrochenen Ringnut aufgenommen ist. Der zweite Sicherungsring ist allerdings in einer unterbrochenen, also in einer durch in die Klauen eingebrachten Ringnut aufgenommen.

Bei einer vorteilhaften Ausgestaltung weist ein zweiter Sicherungsring den Innenring, insbesondere auf der in axialer Richtung vom ersten Sicherungsring abgewandten Seite des Innenrings, begrenzt,
wobei der zweite Sicherungsring in einer zweiten Ringnut aufgenommen ist. Von Vorteil ist dabei, dass der Innenring des Lagers begrenzt ist, auch wenn die Begrenzung im in Umfangsrichtung mehrfach unterbrochen ausgeführten Sitzbereich angeordnet ist. Somit ist eine besonders kompakte Lösung erreicht.

Bei einer vorteilhaften Ausgestaltung ist die zweite Ringnut in Umfangsrichtung insbesondere mehrfach unterbrochen ausgeführt und/oder die zweite Ringnut ist im zweiten Bereich angeordnet. Von Vorteil ist dabei, dass der Adapter sehr kompakt ausgeführt ist, da der Innenring des Lagers in den Bereich der Klauen axial teilweise hervorragt.

Bei einer vorteilhaften Ausgestaltung ist die zweite Ringnut in den Klauen des Adapterteils eingebracht und/oder in den Klauen des Kupplungsteils. Von Vorteil ist dabei, dass der Sicherungsring in axialer Richtung sicher aufgenommen ist.

Bei einer anderen vorteilhaften Ausgestaltung ist die zweite Ringnut in Umfangsrichtung ununterbrochen ausgeführt und ist im Kupplungsteil eingebracht. Von Vorteil ist dabei, dass die axiale Sicherung nicht direkt in der Adapterwelle, sondern in einem anderen Teil, nämlich im Kupplungsteil, ermöglicht ist. Somit überragt der Innenring sogar teilweise den Klauenbereich des Kupplungsteils. Somit ist der Adapter sehr kompakt aufbaubar.

Bei einer vorteilhaften Ausgestaltung weist der Adapter ein Gehäuse aufweist, das ein erstes und ein zweites Gehäuseteil auf,
wobei das erste Gehäuseteil mit dem zweiten Gehäuseteil verbunden ist,
wobei der Außenring des Lagers das im ersten und im zweiten Gehäuseteil aufgenommen ist und das erste zum zweiten Gehäuseteil zentriert. Von Vorteil ist dabei, dass der Außenring die beiden Gehäuseteile zueinander zentriert. Somit übernimmt das Lager zusätzlich eine Zentrierfunktion.

Bei einer vorteilhaften Ausgestaltung ist das Lager als Festlager ausgebildet. Von Vorteil ist dabei, dass das Lager axial fixiert ist.

Bei einer vorteilhaften Ausgestaltung weist der Adapter ein zweites Lager, insbesondere ein als Loslager ausgebildetes Lager, auf,
dessen Außenring im ersten Gehäuseteil aufgenommen ist und dessen Innenring auf die Adapterwelle aufgesteckt ist,
insbesondere wobei im ersten Gehäuseteil, insbesondere auf der vom Kupplungsteil abgewandten Seite des zweiten Lagers ein Wellendichtring aufgenommen ist, der zur Adapterwelle hin abdichtet, insbesondere dessen Dichtlippe auf der Adapterwelle läuft. Von Vorteil ist dabei, dass bei thermisch bedingten Längenveränderungen der Abstand zwischen Festlager und Loslager veränderlich ist, weil das Loslager in axialer Richtung verschiebbar ist, insbesondere etwas verschiebbar ist.

Wichtige Merkmale bei dem Getriebemotor mit einem Adapter sind, dass der Getriebemotor einen Elektromotor und ein Getriebe aufweist,
wobei eine Rotorwelle drehfest verbunden ist mit dem Kupplungsteil, insbesondere mittels Passfederverbindung,
wobei die Adapterwelle drehfest verbunden ist oder einstückig, insbesondere einteilig, ausgebildet ist, mit einem eintreibenden Verzahnungsteil des Getriebes.

Von Vorteil ist dabei, dass der Getriebemotor möglichst kompakt ausführbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 ist eine erfindungsgemäße Klauenkupplung mit Adapterwelle 1 explodiert dargestellt.
In der Figur 2 ist die Klauenkupplung angeschnitten dargestellt.
In der Figur 3 ist ein Adapter in Schnittansicht dargestellt, wobei die Klauenkupplung umfasst ist.
In der Figur 4 ist eine Seitenansicht der Adapterwelle 1 dargestellt.
In der Figur 5 ist ein Ausschnitt der Figur 4 vergrößert dargestellt.
In der Figur 6 ist eine zweite Klauenkupplung angeschnitten in Schrägansicht dargestellt.

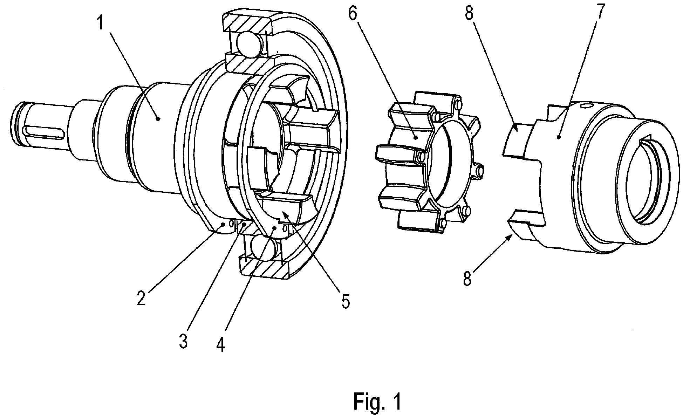

Wie in den Figuren 1 bis 5 dargestellt, weist die Adapterwelle 1 an ihrem dem Kupplungsteil 7 zugewandten axialen Endbereich Klauen 5 auf, welche einen axialen Bereich überdecken, der mit dem von Klauen 8 des Kupplungsteils 7 überdeckten axialen Bereich überlappt.

Die axiale Richtung ist dabei parallel zur Drehachse der Adapterwelle 1. Die Radialabstände sind bezogen auf die Drehachse der Adapterwelle 1.

Ein Dämpfungsteil 6 ist als Kunststoffstern ausgeformt. Hierzu weist das Dämpfungsteil 6 einen ringförmigen Grundkörper auf, an dem radial hervorragende Strahlenbereiche ausgebildet sind.

Der Grundkörper ist radial innerhalb der Klauen 5 und 8 angeordnet. Der von den Strahlenbereichen in radialer Richtung überdeckte Radialabstandsbereich umfasst oder zumindest überlappt mit dem von den Klauen 5 der Adapterwelle 1 in radialer Richtung überdeckten Radialabstandsbereich und mit dem von den Klauen 8 des Kupplungsteils 7 in radialer Richtung überdeckten Radialabstandsbereich.

Das Dämpfungsteil 6, insbesondere also die Strahlenbereiche, sind in Umfangsrichtung zwischen den Klauen 5 der Adapterwelle 1 und den Klauen 8 des Kupplungsteils 7 angeordnet.

Die Strahlenrichtung sind in radialer Richtung ballig ausgeführt. Somit weist die in Umfangsrichtung gemessene Wandstärke des jeweiligen Strahlenbereichs in radialer Richtung ein lokales Maximum auf.

Der von den Klauen 5 der Adapterwelle 1 in axialer Richtung überdeckte Bereich überlappt mit dem von den Klauen 8 des Kupplungsteils 7 in axialer Richtung überdeckten Bereich.

Das Kupplungsteil ist auf eine Rotorwelle 20 aufgesteckt, die durch das Kupplungsteil 7 hindurchragt, bis in einen hohlen Bereich der Adapterwelle 1 hinein.

Die Rotorwelle 20 ist mit dem Kupplungsteil 7, insbesondere mittels einer Passfederverbindung, drehfest verbunden.

Auf die Adapterwelle 1 ist ein Lager aufgesteckt, das vorzugsweise als Festlager fungiert.

Hierzu ist der Innenring 3 des Lagers auf die Adapterwelle 1 aufgesteckt und axial beidseitig mittels zweier Sicherungsringe (2, 4) begrenzt.

Dabei ist ein erster Sicherungsring 2 der beiden Sicherungsringe (2, 4) in einer ersten Ringnut der Adapterwelle 1 vorgesehen, wobei diese erste Ringnut in axialer Richtung beabstandet ist von dem von den Klauen 5 der Adapterwelle 1 in axialer Richtung überdeckten Bereich. Somit ist die erste Ringnut in Umfangsrichtung vollständig umlaufend ununterbrochen ausgeführt.

Der zweite Sicherungsring 2 der beiden Sicherungsringe (2, 4) ist in einer zweiten Ringnut der Adapterwelle 1 vorgesehen, wobei diese zweite Ringnut in axialer Richtung innerhalb von dem von den Klauen 5 der Adapterwelle 1 in axialer Richtung überdeckten Bereich angeordnet ist. Somit ist die zweite Ringnut in Umfangsrichtung mehrfach unterbrochen ausgeführt. Denn die Klauen 5 sind in Umfangsrichtung voneinander beabstandet, insbesondere gleichmäßig.

Da der Innenring 3 des Lagers auf die Adapterwelle 1 aufgesteckt ist und die Adapterwelle 1 in dem axial zwischen den beiden Sicherungsringen 2 und 4 liegenden Bereich berührt, ist der Innenring 3 in den Bereichen zwischen den Klauen 5 nicht abgestützt. Der Lagersitz ist hier also in Umfangsrichtung mehrfach unterbrochen ausgeführt.

Der an der Adapterwelle 1 zur Aufnahme des Innenrings 3 ausgebildete Lagersitz überdeckt also in axialer Richtung einen Bereich, der mit dem von den Klauen 5 des Adapterteils 1 in axialer Richtung überdeckten Bereich überlappt.

Somit ist der Lagersitz in einem ersten Bereich unterbrochen und in einem weiteren Bereich ununterbrochen ausgeführt.

Der erste Bereich trägt 30 % bis 70% zur gesamten axialen Breite des Lagersitzes bei. Der weitere, also ununterbrochene Bereich trägt den restlichen Teil bei.

Besonders bevorzugt ist allerdings eine Ausführung, bei welcher der erste Bereich weniger als die Hälfte, also weniger als 50%, der gesamten axialen Breite des Lagersitzes beiträgt.

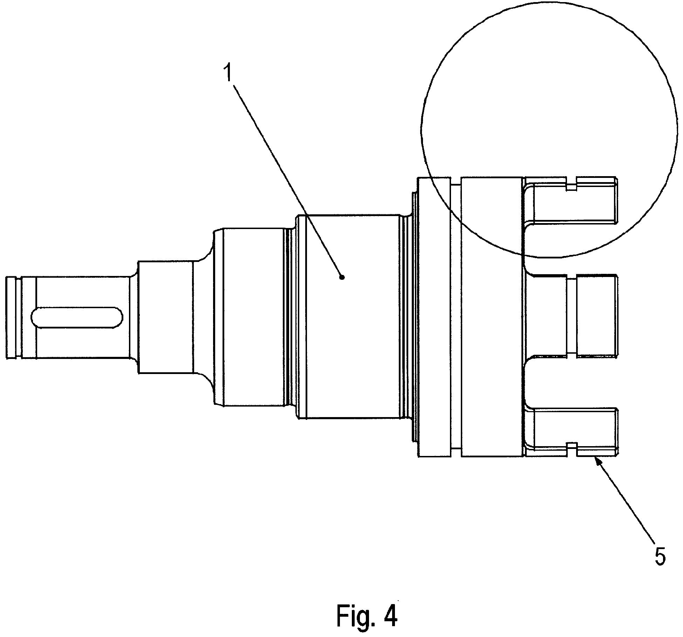

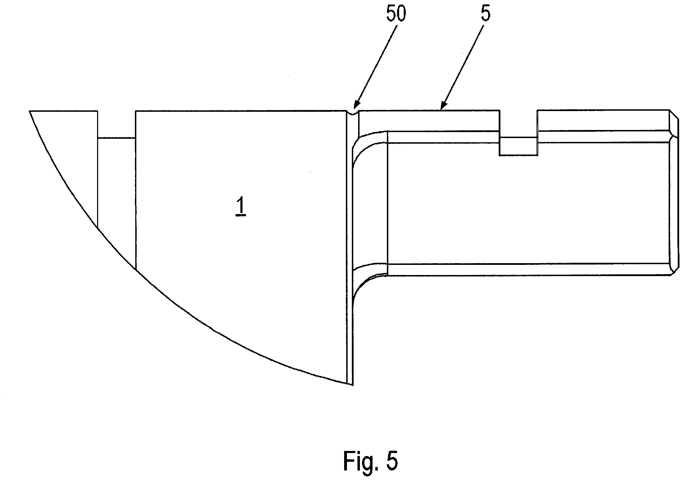

Wie besonders deutlich in Figur 5, die einen Bereich der Figur 4 vergrößert darstellt, zu erkennen, ist am Adapterteil 1 eine Ausnehmung 50 ausgeführt, welche in Umfangsrichtung umläuft. Vorzugsweise ist die Ausnehmung 50 mit Drehen bearbeitet, insbesondere also als Ausdrehung ausgeführt.

Diese Ausdrehung 50 ist im axialen Übergangsbereich zwischen dem ersten und dem weiteren Bereich angeordnet. Somit ist die Ausnehmung 50, insbesondere Ausdrehung, am Rand des von den Klauen 5 in axialen Richtung überdeckten Bereichs angeordnet.

Die Ausnehmung 50, insbesondere Ausdrehung, grenzt also den Bereich des in Umfangsrichtung unterbrochenen Lagersitzes vom restlichen Lagersitz, also vom in Umfangsrichtung ununterbrochen ausgeführten Bereich des Lagersitzes, ab.

Daher ist die Ausnehmung 50 in axialer Richtung zwischen der ersten Ringnut für den ersten Sicherungsring 2 und der zweiten Ringnut für den zweiten Sicherungsring 4 angeordnet.

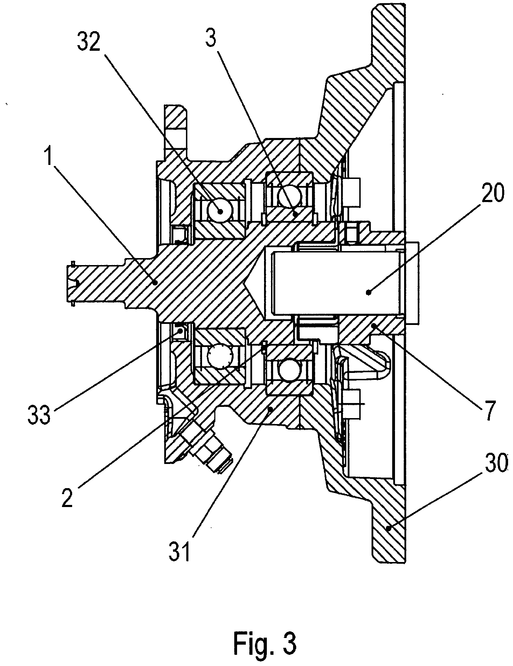

Wie in Figur 3 gezeigt, ist auf die Adapterwelle 1 ein zweites Lager aufgesteckt, das in einem zweiten Gehäuseteil 31 aufgenommen ist und als Loslager fungiert.

Das zweite Gehäuseteil 31 ist mit einem ersten Gehäuseteil 30 verbunden, insbesondere mittels Schrauben.

Der Innenring 3 des ersten Lagers weist zwar - wie oben beschrieben - teilweise einen unterbrochenen Lagersitz auf, jedoch ist der Außenring dieses ersten Lagers teilweise im ersten Gehäuseteil 30 und teilweise im weiten Gehäuseteil 31 aufgenommen.

Somit bewirkt der Außenring des ersten Lagers die Zentrierung des ersten Gehäuseteils 30 zum zweiten Gehäuseteil 31. Außerdem ist im ersten Gehäuseteil 30 ein Wellendichtring 33 aufgenommen, der zur Adapterwelle 1 hin abdichtet. Somit ist das erste Gehäuseteil an ein Getriebegehäuse verbindbar, dessen Innenraum zumindest teilweise mit Öl befüllt ist.

Die Adapterwelle ragt ins Getriebe hinein und ist drehfest mit einem eintreibenden Verzahnungsteil des Getriebes verbunden.

Vorzugsweise ist der Außendurchmesser der Klauen 8 des Kupplungsteils 7 kleiner als der lichte Innendurchmesser des zweiten Sicherungsrings 4, welcher in der in Umfangsrichtung unterbrochenen Ringnut des Adapterteils 1 aufgenommen ist. Somit muss im Bereich der Klauen des Kupplungsteils keine

Bei weiteren erfindungsgemäßen Ausführungsbeispielen wird ist das eintreibende Verzahnungsteil mit der Adapterwelle 1 einstückig, also einteilig, ausgeführt.

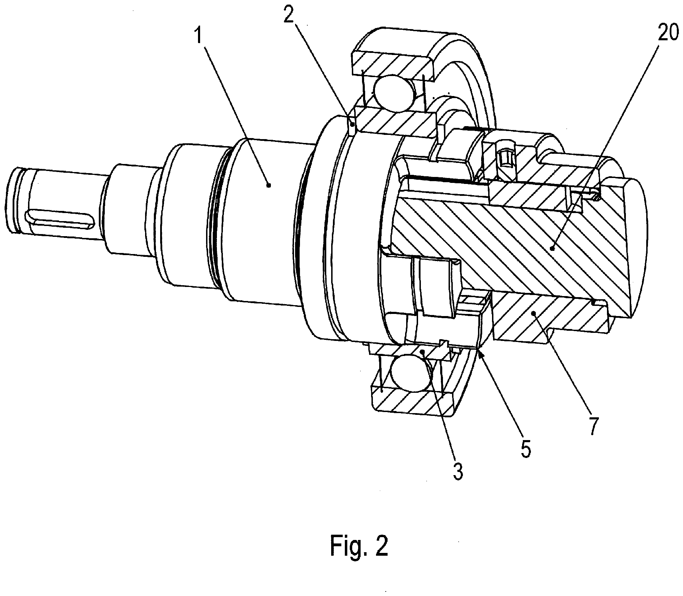

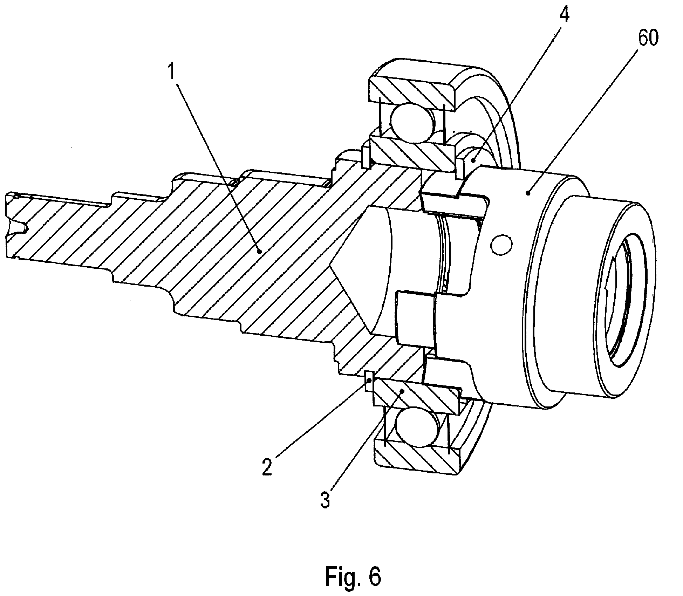

Bei der Ausführung nach Figur 6 ragen die Klauen 5 des Adapterteils im Unterschied zu der Ausführung nach Figur 2 nicht durch den Innenring 3 axial hindurch, sondern der Innenring 3 überragt das Adapterteil 1 axial zum Kupplungsteil 60 hin, dessen Klauen 8 ebenfalls entsprechend kürzer sind im Vergleich zu Figur 2.

Der zweite Sicherungsring 4 ist somit in einer Ringnut des Kuppplungsteils 60 aufgenommen und begrenzt den Innenring 3 entsprechend.

Auf diese Weise ist eines besondere geringe axiale Breite der Kupplung erreichbar, wobei der Innenring 3 einerseits vom ersten Sicherungsring 2, der in einer Ringnut des Adapterteils 1 aufgenommen ist, begrenzt wird und andererseits vom zweiten Sicherungsring 4, der in einer Ringnut des Kupplungsteils 60 aufgenommen ist.

### Bezugszeichenliste

1 Adapterwelle
2 Sicherungsring
3 Innenring des Festlagers
4 Sicherungsring
5 Klauen
6 Dämpfungsteil
7 Kupplungsteil
8 Kläuen
20 Rotorwelle
30 erstes Gehäuseteil
31 zweiten Gehäuseteil
32 Loslager
33 Wellendichtring
50 Ausnehmung, umlaufende Ausdrehung
60 Kupplungsteil

## Patentansprüche

1. Adapter **für einen Getriebemotor,** mit einer Adapterwelle (1) und einem Kupplungsteil (7) sowie einem Lager,
wobei das Adapterteil **des Adapters** Klauen (5), insbesondere in axialer Richtung hervorragende Klauen (5), aufweist,
wobei der Innenring (3) des Lagers auf einen an der Adapterwelle (1) vorgesehenen, Lagersitz aufgesteckt ist,
**wobei** der Lagersitz in axialer Richtung einen ersten Bereich überdeckt, in welchem der Lagersitz in Umfangsrichtung ununterbrochen ausgebildet ist, und einen zweiten Bereich, in welchem der Lagersitz in Umfangsrichtung unterbrochen ausgebildet ist,
**dadurch gekennzeichnet, dass**
**ein zweiter Sicherungsring (2) den Innenring (3), auf der in axialer Richtung vom ersten Sicherungsring (4) abgewandten Seite des Innenrings, begrenzt,**
**wobei der zweite Sicherungsring (2) in einer zweiten Ringnut aufgenommen ist.**

2. Adapter nach Anspruch 1,
**dadurch gekennzeichnet, dass**
zwischen den Klauen des Kupplungsteils (7) und den Klauen (5) der Adapterwelle (1) ein Dämpfungsteil (6) angeordnet ist,
wobei die Strahlenbereiche axial zwischen je einer Klaue des Kupplungsteils (7) und einer des Adapterteils angeordnet ist.

3. Adapter nach einem der vorangegangenen Ansprüche,
**dadurch gekennzeichnet, dass**
in axialer Richtung zwischen dem ersten Bereich und dem zweiten Bereich eine in Umfangsrichtung umlaufende Ausnehmung (50), an der Adapterwelle (1) ausgebildet ist.

4. Adapter nach einem der vorangegangenen Ansprüche,
**dadurch gekennzeichnet, dass**
der von den Klauen (5) in axialer Richtung überdeckte Bereich den ersten Bereich umfasst und von dem zweiten Bereich in axialer Richtung beabstandet ist.

5. Adapter nach einem der vorangegangenen Ansprüche,
**dadurch gekennzeichnet, dass**
die axiale Richtung zur Drehachse der Adapterwelle (1) parallel ausgerichtet ist,

6. Adapter nach einem der vorangegangenen Ansprüche,
**dadurch gekennzeichnet, dass**
der Innenring (3) axial beidseitig durch Sicherungsringe begrenzt ist.

7. Adapter nach einem der vorangegangenen Ansprüche,
**dadurch gekennzeichnet, dass**
ein erster Sicherungsring (4) in einer ersten Ringnut,
der Adapterwelle (1) aufgenommen ist und den Innenring (3) begrenzt,
wobei die erste Ringnut von dem ersten Bereich in axialer Richtung beabstandet ist.

8. Adapter nach einem der vorangegangenen Ansprüche,
**dadurch gekennzeichnet, dass**
die zweite Ringnut in Umfangsrichtung unterbrochen ausgeführt ist und/ wobei die zweite Ringnut im zweiten Bereich angeordnet ist.

9. Adapter nach einem der vorangegangenen Ansprüche,
**dadurch gekennzeichnet, dass**
die zweite Ringnut in den Klauen (5) des Adapterteils eingebracht ist und/ in den Klauen des Kupplungsteils (7).

10. Adapter nach Anspruch 8,
**dadurch gekennzeichnet, dass**
die zweite Ringnut in Umfangsrichtung ununterbrochen ausgeführt ist und im Kupplungsteil (7) eingebracht ist.

11. Adapter nach einem der vorangegangenen Ansprüche,
**dadurch gekennzeichnet, dass**
der Adapter ein Gehäuse aufweist, das ein erstes und ein zweites Gehäuseteil (30) aufweist,
wobei das erste Gehäuseteil (30) mit dem zweiten Gehäuseteil (31) verbunden ist,
wobei der Außenring des Lagers im ersten und im zweiten Gehäuseteil (30) aufgenommen ist und das erste zum zweiten Gehäuseteil (31) zentriert.

12. Adapter nach einem der vorangegangenen Ansprüche,
**dadurch gekennzeichnet, dass**
das Lager als Festlager ausgebildet ist.

13. Adapter nach einem der vorangegangenen Ansprüche,
**dadurch gekennzeichnet, dass**
der Adapter ein zweites Lager, aufweist,
dessen Außenring im ersten Gehäuseteil (30) aufgenommen ist und dessen Innenring (3) auf die Adapterwelle (1) aufgesteckt ist,

14. Getriebemotor mit einem Adapter nach einem der vorangegangenen Ansprüche,
**dadurch gekennzeichnet, dass**
der Getriebemotor einen Elektromotor und ein Getriebe aufweist,
wobei eine Rotorwelle (20) drehfest verbunden ist mit dem Kupplungsteil (7), insbesondere mittels Passfederverbindung,
wobei die Adapterwelle (1) drehfest verbunden ist oder einstückig, insbesondere einteilig, ausgebildet ist, mit einem eintreibenden Verzahnungsteil des Getriebes.

## Claims

1. An adaptor for a geared motor, having an adaptor shaft (1) and a coupling part (7) as well as a bearing,
wherein the adaptor part of the adaptor has claws (5), in particular claws (5) projecting in an axial direction,
wherein the inner ring (3) of the bearing is placed onto a bearing seat provided at the adaptor shaft (1),
wherein the bearing seat covers, in an axial direction, a first region, in which the bearing seat is uninterrupted in a circumferential direction, and a second region, in which the bearing seat is interrupted in a circumferential direction,
**characterised in that**
a second retaining ring (2) delimits the inner ring (3), at that side of the inner ring remote in an axial direction from the first securing ring (4),
wherein the second securing ring (2) is received in a second annular groove.

2. An adaptor according to claim 1,
**characterised in that**
a damping part (6) is arranged between the claws of the coupling part (7) and the claws (5) of the adaptor shaft (1),
wherein the ray regions are each arranged axially between one claw of the coupling part (7) and one claw of the adaptor part.

3. An adaptor according to any one of the preceding claims,
**characterised in that**
a cutout (50) encircling in a circumferential direction is formed at the adaptor shaft (1), between the first region and the second region in an axial direction.

4. An adaptor according to any one of the preceding claims,
**characterised in that**
the region covered by the claws (5) in an axial direction comprises the first region and is at a distance from the second region in an axial direction.

5. An adaptor according to any one of the preceding claims,
**characterised in that**
the axial direction is oriented parallel to the rotational axis of the adaptor shaft (1).

6. An adaptor according to any one of the preceding claims,
**characterised in that**
the inner ring (3) is axially delimited on both sides by retaining rings.

7. An adaptor according to any one of the preceding claims,
**characterised in that**
a first retaining ring (4) is received in a first annular groove of the adaptor shaft (1) and delimits the inner ring (3),
wherein the first annular groove is at a distance from the first region in an axial direction.

8. An adaptor according to any one of the preceding claims,
**characterised in that**
the second annular groove is interrupted in a circumferential direction and wherein the second annular groove is arranged in the second region.

9. An adaptor according to any one of the preceding claims,
**characterised in that**
the second annular groove is made in the claws (5) of the adaptor part and in the claws of the coupling part (7).

10. An adaptor according to claim 8,
**characterised in that**
the second annular groove is uninterrupted in a circumferential direction and is made in the coupling part (7).

11. An adaptor according to any one of the preceding claims,
**characterised in that**
the adaptor has a housing which has a first and a second housing part (30),
wherein the first housing part (30) is connected to the second housing part (31),
wherein the outer ring of the bearing is received in the first and in the second housing part (30) and centres the first housing part with respect to the second housing part (31).

12. An adaptor according to any one of the preceding claims,
**characterised in that**
the bearing is in the form of a fixed bearing.

13. An adaptor according to any one of the preceding claims,
**characterised in that**
the adaptor has a second bearing, whose outer ring is received in the first housing part (30) and whose inner ring (3) is placed onto the adaptor shaft (1).

14. A geared motor having an adaptor according to any one of the preceding claims,
**characterised in that**
the geared motor has an electric motor and a gear unit,
wherein a rotor shaft (20) is connected to the coupling part (7) in a rotationally-fixed manner, in particular by means of a feather key connection,
wherein the adaptor shaft (1) is connected in a rotationally-fixed manner to a driving toothing part of the gear unit or is formed in one-piece, in particular integrally, therewith.

## Revendications

1. Adaptateur dévolu à un motoréducteur, comprenant un arbre adaptateur (1) et une partie d'accouplement (7), ainsi qu'un roulement,
la partie adaptatrice dudit adaptateur étant munie de griffes (5), notamment de griffes (5) en saillie dans la direction axiale,
la bague intérieure (3) du roulement étant emboîtée sur un siège de palier prévu sur l'arbre adaptateur (1),
lequel siège de palier couvre, dans la direction axiale, une première région dans laquelle ledit siège de palier est de réalisation ininterrompue dans la direction du pourtour, et une seconde région dans laquelle ledit siège de palier est de réalisation discontinue dans la direction du pourtour,
**caractérisé par le fait**
**qu'**une seconde bague d'arrêt (2) délimite la bague intérieure (3) du côté de ladite bague intérieure tourné à l'opposé de la première bague d'arrêt (4) dans la direction axiale,
ladite seconde bague d'arrêt (2) étant logée dans une seconde rainure annulaire.

2. Adaptateur selon la revendication 1,
**caractérisé par le fait**
**qu'**une pièce d'amortissement (6) est interposée entre les griffes de la partie d'accouplement (7) et les griffes (5) de l'arbre adaptateur (1),
les zones rayonnées étant axialement disposées entre une griffe respective de ladite partie d'accouplement (7) et l'une des griffes de la partie adaptatrice.

3. Adaptateur selon l'une des revendications précédentes,
**caractérisé par le fait**
**qu'**un évidement circonférentiel (50), longeant la direction du pourtour, est façonné sur l'arbre adaptateur (1) dans la direction axiale, entre la première région et la seconde région.

4. Adaptateur selon l'une des revendications précédentes,
**caractérisé par le fait que**
la région, couverte par les griffes (5) dans la direction axiale, inclut la première région et est située à distance de la seconde région dans la direction axiale.

5. Adaptateur selon l'une des revendications précédentes,
**caractérisé par le fait que**
la direction axiale et orientée parallèlement à l'axe de rotation de l'arbre adaptateur (1).

6. Adaptateur selon l'une des revendications précédentes,
**caractérisé par le fait que**
la bague intérieure (3) est délimitée axialement, de part et d'autre, par des bagues d'arrêt.

7. Adaptateur selon l'une des revendications précédentes,
**caractérisé par le fait**
**qu'**une première bague d'arrêt (4) est logée dans une première rainure annulaire de l'arbre adaptateur (1), et délimite la bague intérieure (3),
ladite première rainure annulaire étant située à distance de la première région dans la direction axiale.

8. Adaptateur selon l'une des revendications précédentes,
**caractérisé par le fait que**
la seconde rainure annulaire est de réalisation discontinue dans la direction du pourtour, ladite seconde rainure annulaire étant située dans la seconde région.

9. Adaptateur selon l'une des revendications précédentes,
**caractérisé par le fait que**
la seconde rainure annulaire est pratiquée dans les griffes (5) de la partie adaptatrice et dans les griffes de la partie d'accouplement (7).

10. Adaptateur selon la revendication 8,
**caractérisé par le fait que**
la seconde rainure annulaire est de réalisation ininterrompue dans la direction du pourtour et est pratiquée dans la partie d'accouplement (7).

11. Adaptateur selon l'une des revendications précédentes,
**caractérisé par le fait que**
ledit adaptateur est doté d'un boîtier comprenant des première (30) et seconde parties,
la première partie (30) du boîtier étant reliée à la seconde partie (31) dudit boîtier,
sachant que la bague extérieure du roulement est logée dans lesdites première (30) et seconde parties du boîtier, et centre la première partie par rapport à la seconde (31).

12. Adaptateur selon l'une des revendications précédentes,
**caractérisé par le fait que**
le roulement est conçu comme un palier fixe.

13. Adaptateur selon l'une des revendications précédentes,
**caractérisé par le fait que**
ledit adaptateur est nanti d'un second roulement
dont la bague extérieure est logée dans la première partie (30) du boîtier et dont la bague intérieure (3) est emboîtée sur l'arbre adaptateur (1).

14. Motoréducteur équipé d'un adaptateur conforme à l'une des revendications précédentes,
**caractérisé par le fait que**
ledit motoréducteur comporte un moteur électrique et une transmission,
un arbre rotorique (20) étant relié à la partie d'accouplement (7) avec verrouillage rotatif, notamment au moyen d'une liaison clavetée,
sachant que l'arbre adaptateur (1) est relié, avec verrouillage rotatif, à une partie dentée menante de la transmission ou est réalisé d'une seule pièce, notamment d'un seul tenant avec ladite partie.
